# EUROPÄISCHE PATENTSCHRIFT

(11) **EP 2 234 806 B1**
(45) Veröffentlichungstag und Bekanntmachung des Hinweises auf die Patenterteilung: **26.10.2011**
(21) Anmeldenummer: 09702674.4
(22) Anmeldetag: 14.01.2009
(51) Int. Cl.: B32B 9/04, B32B 17/06, B32B 27/30, E04F 13/14

(54) **VERBUNDWERKSTOFF MIT EINER STEINSCHICHT**
COMPOSITE MATERIAL WITH A STONE LAYER
MATÉRIAU COMPOSITE AVEC UNE COUCHE EN PIERRE

(30) Priorität: 14.01.2008 DE 102008004412; 11.02.2008 DE 102008008659
(43) Veröffentlichungstag der Anmeldung: 06.10.2010
(73) Patentinhaber: Jogerst Stein Technologie GmbH, 77704 Oberkirch (DE)
(72) Erfinder: WALTER, Michael, 77704 Oberkirch (DE)
(74) Vertreter: Maucher, Wolfgang
(86) Internationale Anmeldenummer: PCT/EP2009/000169
(87) Internationale Veröffentlichungsnummer: WO 2009/090041

(56) Entgegenhaltungen:
- EP-A- 0 810 085
- DE-A1-102005 038 022

## Beschreibung

Die Erfindung betrifft einen Verbundwerkstoff, der als ein zur Weiterverarbeitung bestimmtes Halbzeug ausgebildet ist, mit einer Steinschicht, die zumindest auf einer ihrer beiden Flachseiten einen Grundträger hat, welcher Grundträger zur Verbindung mit den vom Grundträger beaufschlagten Oberflächen bestimmt ist, und der eine Kunststofffolie aus einem thermo- oder duroplastischen Kunststoff aufweist.

Die Erfindung betrifft auch ein Verkleidungselement, insbesondere zur Wand- oder Fassadenverkleidung, dass unter Verwendung des eingangs genannten Verbundwerkstoffes hergestellt ist.

Es ist bereits bekannt, zwischen die Scheiben eines Verbundglases eine dünne transluszente Natursteinschicht einzubringen, um ein ästhetisch ansprechendes Fassadenelement zu schaffen. Zu diesem Zweck wird die Natursteintafel zunächst in dünne Scheiben aufgeschnitten, um anschließend die einzelnen Scheiben mit Hilfe einer als Haftvermittler dienenden Kunststofffolie auf einer der für die Verbundglasscheibe benötigten Glasscheiben zu befestigen. Dabei wird zur Herstellung solcher Verbundglasscheiben üblicherweise eine Polyvinylbuteral-Folie verwendet. Ist die Natursteinscheibe auf die Glasscheibe aufgebracht, kann die Natursteinscheibe geschliffen und auf die gewünschte Scheibendicke kalibriert werden. Da der Naturstein regelmäßig nass geschliffen wird und die als Haftvermittler verwendete Polyvinylbuteral-Folie wasserempfindlich beziehungsweise wasserlöslich ist, werden zumindest Teilbereiche der mit der Glasscheibe verbundenen Kunststofffolie beschädigt und aufgelöst. Nach dem Kalibrieren der Natursteinscheibe wird auch auf die geschliffene Scheibenseite der Natursteinscheibe eine Glasscheibe befestigt, wobei auch hier die Verbindung zwischen Natursteinscheibe und Glasscheibe unter Druck und insbesondere unter Hitzeinwirkung im Autoklaven mit Hilfe einer weiteren, als Haftvermittler dienenden Polyvinylbuteral-Folie erfolgt. Da das Aufschneiden und Abschleifen des Natursteins im Steinmetzbetrieb und die Weiterverarbeitung des Verbundmaterials im Autoklaven regelmäßig bei einem anderen Dienstleister erfolgt, und da die Glasscheiben mit hohem Aufwand zwischen den einzelnen Herstellungsschritten angeliefert und abtransportiert werden müssen, ist die Herstellung solcher Fassadenelemente sehr aufwendig und kostspielig, wobei sich die Fassadenelemente herstellungsbedingt praktisch nicht ohne Vorschäden fertigstellen lassen.

Aus der DE 10 2005 038 022 A1 ist bereits ein Verbundwerkstoff der eingangs erwähnten Art vorbekannt, der aus einer Kunststofffolie und einer Natursteinschicht besteht. Dabei ist die Natursteinschicht mit der als Grundträger dienenden Kunststofffolie ohne einen dazwischen vorgesehenen Haftvermittler direkt unter Druck- und Hitzeeinwirkung verbunden. Zwar mag die Kunststofffolie durch wiederholtes Aufschmelzen und anschließendes Abkühlen bei Bedarf auch beliebig viele Verarbeitungsstufen durchlaufen. Mehrere solcher Verarbeitungsstufen sind in der DE 10 2005 038 022 A1 aber weder vorgesehen, noch angesprochen.

Aus der DE 295 08 453 U1 kennt man bereits ein Dekorelemenet, das aus mindestens einer dünnen Natursteinplatte besteht, die über eine hochreisfeste Kunststofffolie mit einer gläsernen Tragplatte großflächig verbunden ist. Die als Haftvermittler dienende Kunststofffolie bedingt einen komplexen mehrschichtigen Aufbau des vorbekannten Dekorelements, der mit einer Eintrübung des verwendeten Dekors und somit mit einer optischen Beeinträchtigung verbunden sein kann.

Ein vergleichbares Dekorelement mit denselben Nachteilen ist auch aus der EP 0 122 357 A vorbekannt.

Aus der WO 00/67999 A1 kennt man bereits ein beispielsweise als Bodenfliese bestimmtes Dekorelement, dass aus einer gläsernen Deckschicht und einem Grundträger besteht, zwischen denen eine dünnere Dekorschicht eingelegt ist, die auch aus Stein bestehen kann. Um diese Schichten des vorbekannten Dekorelements miteinander zu verbinden, ist zwischen den einzelnen Schichten ein beispielsweise aus einem Copolymer hergestellter Haftvermittler vorgesehen, sodass die Schichten des vorbekannten Dekorelements im Autoklaven unter Druck- und Temperatureinwirkung fest miteinander verbunden werden können. Auch dieses vorbekannte Dekorelement weist jedoch einen vielschichtigen Aufbau auf, wobei zwischen den einzelnen Lagen zusätzlich eine als Haftvermittler dienende Schicht vorgesehen ist.

Aus der EP 0 810 085 A1 ist bereits ein Verbundwerkstück vorbekannt, das insbesondere als Fassadenelement ausgebildet ist. Das vorbekannte Verbundwerkstück weist eine dünne Steinschicht auf, die auf eine ihrer beiden Flachseiten über eine Klebeschicht mit einer Glasscheibe verbunden ist. Dabei besteht die Klebeschicht aus einem thermoplastischen Polyurethan. Das als Fassadenelement bestimmte vorbekannte Verbundwerkstück wird in großformatigen Scheiben von beispielsweise 1,4 x 0,9 m hergestellt. Das vorbekannte Verbundwerkstück wird als vorgefertigtes Fassadenelement verbaut und soll aufgrund seiner lichtdurchlässigen Eigenschaften auch im Rauminneren einen ästhetisch ansprechenden Eindruck vermitteln. Da auch das aus EP 0 810 085 A1 vorbekannte Verbundwerkstück lediglich als vorgefertigtes Fassadenelement verbaut werden soll, bleibt in der EP 0 810 085 A1 das Problem ungelöst, wie das Handling einer als Dekorelement dienenden Steinschicht während des Transports und der Weiterverarbeitung erleichtert werden kann.

Aus der WO 00/67999 A1 sowie der US-A-4 511 627 sind bereits Verbundglasscheiben mit zwei Glasplatten und einer dazwischen eingebrachten Harzschicht vorbekannt, die durch Einbringen einer hitzehärtbaren und ein Etylen-Vinylacetat-Copolymer aufweisenden Harzschicht zwischen die beiden Glasplatten und anschließendes Hitzehärten der Harzschicht hergestellt werden. Die vorbekannten Verbundglasscheiben sind aber auf ihre Funktion als Glasscheiben beschränkt und für dekorative Zwecke weder vorgesehen noch geeignet. Die vorbekannte Verbundglasscheiben lösen insbesondere nicht die Aufgabe, das Handling einer als Dekorelement dienenden Steinschicht während des Transportes und der Weiterverarbeitung zu erleichtern.

Es besteht daher die Aufgabe, einen Verbundwerkstoff zu schaffen, der die Herstellung solcher, eine Steinschicht aufweisenden Dekorelemente wesentlich vereinfacht.

Die erfindungsgemäße Lösung dieser Aufgabe besteht bei dem Verbundwerkstoff der eingangs erwähnten Art darin, dass die für den Grundträger verwendete Kunststofffolie eine transluszente Ethylenvinylacetat-Folie ist, die unter Druck- und/oder Temperatureinwirkung derart mehrstufig abbindet, dass die Ethylenvinylacetat-Folie in einer ersten Abbindungsstufe eine Schmelzkleberfunktion entfaltet und in einer nachfolgenden Abbindungs- oder Verarbeitungsstufe eine dauerhaft kraftschlüssig Verbindung mit den vom Grundträger beaufschlagten Oberflächen eingeht, und dass auf die der Steinschicht abgewandte Außenseite dieser Kunststofffolie eine PET-Folie als Haftvermittler aufgebracht ist.

Der erfindungsgemäße Verbundwerkstoff weist eine Steinschicht auf, die zumindest auf einer ihrer beiden Flachseiten einen Grundträger aus transluszentem Material hat. Dieser Grundträger ist als Folie ausgestaltet, die aus einem thermo- oder duroplastischen Kunststoff hergestellt ist.

Für den erfindungsgemäßen Verbundwerkstoff ist kennzeichnend, dass die für den Grundträger verwendete Kunststofffolie eine transluszente Ethylenvinylacetat-Folie ist, die unter Druck- und/oder Temperatureinwirkung derart, dass die Ethylenvinylacetat-Folie in einer ersten Abbindungsstufe eine Schmelzkleberfunktion entfaltet und in einer nachfolgenden Abbindungs- oder Verarbeitungsstufe eine dauerhaft kraftschlüssige und wasserfeste Verbindung mit den vom Grundträger beaufschlagten Oberflächen eingeht. Diese kraftschlüssige und wasserfeste Verbindung ist derart dauerhaft, dass die verwendete Ethylenvinylacetat-Folie auch durch erneutes Abbinden nicht wieder in ihre Schmelzkleberfunktion und somit in ihre erste Abbindungsstufe zurückfällt.

In der ersten Abbindungsstufe, die beispielsweise durch eine gegebenenfalls auch verminderte Druck- und/oder Temperatureinwirkung ausgelöst werden kann, entfaltet die für den Grundträger verwendete Ethylenvinylacetat-Folie eine Schmelzkleberfunktion, wobei die Kunststofffolie zunächst mit ihrer einen Flachseite auf der benachbarten Flachseite der Steinschicht positioniert und fixiert werden kann, um anschließend in einem nachfolgenden Abbindungs- oder Verarbeitungsschritt, der auch mit einer erhöhten Druck- und/oder Temperatureinwirkung verbunden sein kann, den aus Steinschicht und Kunststofffolie bestehenden Verbundwerkstoff mit der der Steinschicht abgewandten Flachseite der Kunststofffolie auf einer Glasscheibe oder einer anderen Materialoberfläche derart festzulegen, dass sich eine dauerhaft kraftschlüssige und wasserfeste Verbindung u.a. zwischen dieser Materialoberfläche und dem Grundträger einstellt. Diese weitere Abbindungs- und Verarbeitungsstufe wird regelmäßig mit einer veränderten molekularen Gitterstruktur in der Kunststofffolie verbunden sein, die eine starke Vernetzung sowie eine dauerhafte dreidimensionale Gitterstruktur erzeugt. Der erfindungsgemäße Verbundwerkstoff stellt somit ein Zwischenprodukt dar, das an die festgelegten Herstellungsorte beispielsweise in der Glasindustrie bequem angeliefert und dort zu dem gewünschten Dekorelement oder dergleichen Fertigprodukt weiterverarbeitet werden kann, ohne dass am Fertigprodukt herstellungsbedingte Vorschäden zu erwarten sind.

Auf die aus einer Ethylenvinylacetat-Folie hergestellte Kunststofffolie des Grundträgers ist außenseitig eine PET-FOlie als Haftvermittler aufgebracht. Diese PET-Folie dient nicht nur als Haftvermittler, - sondern hat darüber hinaus auch eine lagestabilisierende und schützende Funktion für den erfindungsgemäßen Verbundwerkstoff. Der aus der Steinschicht sowie den Ethylenvinylacetat- und PET-Folien zusammengestellte Verbund stellt eine gegen Verschmutzungen oder Beschädigungen gesicherte Einheit dar, die ein leicht transportierbares und jederzeit überall weiterzuverarbeitendes Halbzeug bildet.

Die für den Grundträger verwendete und erfindungsgemäß mehrstufig abbindende Ethylenvinylacetat-Folie, die beispielsweise von der Firma Sekisui oder unter der Markenbezeichnung "EVA-Safe" auch von der Firma Bridgestone vertrieben wird, lässt sich im Autoklaven, oder auch ohne Druck in diversen Öfen, unter Hitzeeinwirkung und ohne Zuhilfenahme eines weiteren Klebers leicht mit der Steinschicht verbinden.

Die für den stabilisierenden Grundträger verwendete Ethylenvinylacetat-Folie hat eine Doppelfunktion, nämlich einerseits die Steinschicht zu stabilisieren, während diese bearbeitet, gelagert oder transportiert wird und andererseits die Steinschicht mit dem zu verkleidenden Gegenstand durch einen Aufschmelz- oder Laminierungsprozess zu verkleben, vorzugsweise ohne dass dabei noch irgendein Klebstoff benötigt wird. Der erfindungsgemäße Verbundwerkstoff lässt sich unter Anwendung von Hitze, beziehungsweise Über- oder Unterdruck, an einem zu verkleidenden Gegenstand direkt ankleben, ohne dass eine zusätzliche Klebeschicht vorgesehen sein müsste.

Um mit Hilfe des erfindungsgemäßen Verbundwerkstoffes auch dreidimensional geformte Produkte mit einer Steinschicht versehen zu können, ist es vorteilhaft, wenn der Verbundwerkstoff verformbar, insbesondere dreidimensional verformbar ist.

Besonders vorteilhaft ist es, wenn die Steinschicht zumindest auf einer ihrer beiden Flachseiten und insbesondere auf beiden Flachseiten jeweils mit einem, eine mehrstufig abbindende Ethylenvinylacetat-Folie sowie außenseitig eine PET-Folie aufweisenden Grundträger verbunden ist. Ein solcher Verbundwerkstoff, dessen Steinschicht auf beiden Seiten mit einem Grundträger verbunden ist, lässt sich beidseits mit weiteren Schichten oder einem zu verkleidenden Gegenstand verbinden.

Es ist ein besonderer Vorteil der erfindungsgemäß verwendeten Ethylenvinylacetat-Folie, dass die als Grundträger dienende und aus einer mehrstufig abbindenden Ethylenvinylacetat-Folie hergestellte Kunststofffolie eine bei Normaltemperatur nicht klebende und unter Hitze- und/oder Druckeinwirkung klebende Kunststofffolie ist.

Eine bevorzugte Ausführungsform gemäß der Erfindung sieht vor, dass zumindest ein Grundträger des Verbundwerkstoffes auf seiner einen Flachseite mit der Steinschicht verbunden und auf seiner der Steinschicht abgewandten Flachseite zur Verbindung mit einer Glasplatte bestimmt ist.

Eine bevorzugte Ausführungsform gemäß der Erfindung besteht darin, dass der Verbundwerkstoff zur Herstellung eines Verkleidungselementes insbesondere zur Wand- oder Fassadenverkleidung ausgebildet ist.

Um die gestalterischen Möglichkeiten noch zu erhöhen, ist es zweckmäßig, wenn die für den Grundträger verwendete Ethylenvinylacetat-Folie durchsichtig und/oder lichtdurchlässig ist. Der erfindungsgemäße Verbundwerkstoff kann besonders lichtdurchlässig beziehungsweise transluszent ausgestaltet werden, wenn die als Grundträger dienende Ethylenvinylacetat-Folie durchsichtig ist.

Der erfindungsgemäße Verbundwerkstoff kann mit Hilfe einer beispielsweise 2 oder 3 mm starken Steinschicht plattenförmig und unflexibel ausgestaltet sein, wenn der Verbundwerkstoff lediglich auf flächige Oberflächen aufgebracht werden soll.

Um den aus einer dünnen Steinschicht sowie aus einer unter Druck oder Hitze klebenden und mehrstufig abbindenden Ethylenvinylacetat-Folie sowie einer PET-Folie gebildeten Verbundwerkstoff auch aus der Ebene heraus verformen und auf gekrümmte oder unebene Oberflächen aufbringen zu können, ist es jedoch vorteilhaft, wenn das Korngefüge der aus einem körnigen Steinmaterial hergestellten und mit zumindest einem Grundträger verbundenen Steinschicht aufgelöst ist. Zwar ist das Korngefüge der aus einem körnigen Steinmaterial hergestellten und mit zumindest einem Grundträger verbundenen Steinschicht aufgelöst, jedoch sind die Brüche zwischen den einzelnen Körnern des aufgelösten Korngefüges kaum sichtbar, weil diese einzelnen Bestandteile der Steinschicht durch den Grundträger in ihrer Lage bleiben.

Dabei sieht eine bevorzugte Ausführungsform gemäß der Erfindung vor, dass die Steinschicht als Naturstein- oder Kunststeinschicht ausgestaltet ist.

Weiterbildungen gemäß der Erfindung ergeben sich aus der Beschreibung in Verbindung mit den Zeichnungen sowie den Ansprüchen. Nachstehend wird die Erfindung anhand eines bevorzugten Ausführungsbeispieles noch näher beschrieben.

Es zeigt:
- Fig. 1: die Herstellung eines Verbundwerkstoffes mit einer zentralen Steinschicht in einem ersten Verfahrensschritt,
- Fig. 2: einen weiteren Verfahrensschritt zur Herstellung des in Fig. 1 gezeigten Verbundwerkstoffes und
- Fig. 3: den als Halbzeug hergestellten Verbundwerkstoff in seinem schematisch dargestellten Schichtenaufbau.

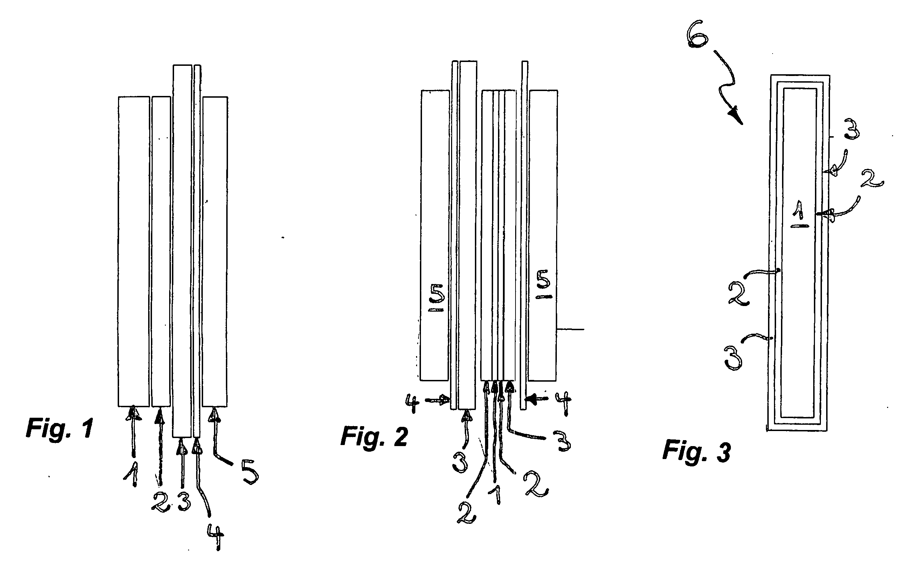

Anhand der oben erwähnten Fig. 1 bis 3 wird das Verfahren zur Herstellung des oben beschriebenen Verbundwerkstoffes noch näher dargestellt. Wie aus Fig. 1 deutlich wird, wird in einem ersten Verfahrensschritt eine Steinplatte 1 gründlich vorgereinigt. Dazu verwendete Mittel sind Isopropanol, Aceton und Ethanol. Anschließend wird die Steinplatte 1 mit ionisierter Luft abgeblasen. Auf die Steinplatte 1 wird eine 0,4 mm starke Folie aus Ethylen-Vinyl-Acetat sowie eine Lage stabilisierende und schützende PET-Folie 3 mit 0,2 mm, die als Auslaufschutz randseitig etwas überstehen kann, und zusätzlich eine 0,1 1 mm PET-Trennfolie 4 aufgelegt. Die PET-Trennfolie 4 dient lediglich als Trennschicht für das in einem zur Weiterbearbeitung der Steinplatte 1 verwendeten Vakuumsack benötigte Stützglas 5. Der Vakuumsack wird auf ca. 0,1 Bar evakuumiert. Anschließend kommt der Vakuumsack in den Autoklaven. Der Autoklaven wird dann auf 75°C vorgeheizt und eine Stunde lang auf dieser Temperatur gehalten. Anschließend wird die Temperatur auf 100°C hochgefahren und nach Erreichen dieser Temperatur etwa ca. 15 Minuten später auch der Druck auf 6 Bar hochgefahren. Die Temperatur und der Druck werden anschließend über eine Zeitspanne von ca. drei Stunden exakt so gehalten. Danach wird zunächst nur die Temperatur heruntergefahren und dass Zwischenprodukt über eine meist einstündige Abkühlphase im Autoklaven auf Raumtemperatur abgekühlt. Es ist wichtig, während dieser Zeitspanne, d.h. während dieser Abkühlphase, bis zum Öffnen des Autoklaven den Druck auf 6 Bar zu halten. Dabei ist zu bemerken, dass bei einer Temperatur von 100°C keine Vernetzung der Ethylen-Vinyl-Acetat-Folie eintritt, sondern nur die Schmelzkleberfunktion dieser Ethylen-Vinyl-Acetat-Folie aktiviert wird. Während eine solche Ethylen-Vinyl-Acetat-Folie in anderen Anwendungsbereichen regelmäßig ohne Autoklavenprozess verarbeitet wird, kann man bei dem hier beschriebenen Verfahren durch die Temperatur- und Druckeinwirkung im Autoklaven über eine chemische Verbindung hinaus auch eine zusätzliche mechanische Verbindung erreichen, die notwendig ist, um insbesondere nach dem ersten Verarbeitungsschritt die Steinplatte 1 noch abfräsen und kalibrieren zu können, derart, bis diese Steinschicht eine Transluszenz erreicht. Die durch die chemische Verbindung und die zusätzliche mechanische Verbindung der Ethylen-Vinyl-Acetat-Folie erreichte Adhäsion verhindert eine Delaminierung des Zwischenproduktes während der Steinbearbeitung, welche nach dem ersten Autoklavenprozess vorzunehmen ist.

In dem in Fig. 1 veranschaulichten Verfahrensschritt hat man nun einen Vorverbund mit einer dünnen transluszenten Steinschicht 1 erhalten, welche Steinschicht einseitig mit aufgeschmolzener Ethylen-Vinyl-Acetat-Folie 2 und einer stabilisierenden, schützenden PET-Folie 3 beschichtet ist. Um den erfindungsgemäßen Verbundwerkstoff fertigzustellen, muss der anhand von Fig. 1 erwähnte Aufbau und Prozess deckungsgleich auch auf der zweiten Seite durchgeführt werden, während auf der ersten Seite noch einmal eine PET-Trennfolie 4 und ein Stützglas 5 benötigt wird. In einem nachfolgenden Verarbeitungsschritt, der in das Herstellungsverfahren eingebaut wird und sehr wichtig ist und der das Halbzeug erst als solches definiert, wird nach den ersten drei Stunden mit 100°C und 6 Bar im Autoklaven die Temperatur noch einmal auf 120°C und 6 Bar erhöht. Diese gesteigerte Temperatur und die Druckeinwirkung wird nun auch über einen Zeitraum von weiteren drei Stunden gehalten, bevor der bereits erwähnte und beschriebene Abkühlungsvorgang eingeleitet wird. Durch diesen Verfahrensschritt wird der Vernetzungsprozess in der Ethylen-Vinyl-Acetat-Folie 2 aktiviert und man erhält mit der Außenschicht 3 aus PET nach dem Entfernen der Stützgläser 5 ein Halbzeug, das völlig unempfindlich gegen äußere Einflüsse nun in allen denkbaren Gläsern und Glasprozessen mitverarbeitet werden kann. Eine Verarbeitung ist insbesondere auch für den Außenbereich sowie für die dreidimensionale Verarbeitung des Verbundwerkstoffes möglich. Durch die oben beschriebenen Verfahrensschritte wird ein funktionsfähiger Verbundwerkstoff hergestellt, der absolut nicht delaminierend ist. Alle denkbaren Innen- und Außenanwendungen sind mit Hilfe des oben beschriebenen Verbundwerkstoffes möglich.

Auf diese Weise wird letztendlich das in Fig. 3 dargestellte Halbzeug 6 hergestellt, das eine zentrale Steinschicht 1 in bis zur Transluszenz kalibrierter Schichtdicke aufweist. Auf beide Flachseiten dieser Steinschicht 1 ist beidseits eine Ethylen-Vinyl-Acetat-Folie 2 aufgebracht, die unter Druck- und Temperatureinwirkung in ihre unabänderlich vernetzte Struktur überführt werden kann. Auf die Außenseiten des Halbzeugs 6 ist jeweils eine PET-Folie 3 oder dergleichen Haftvermittler aufgebracht, welcher Haftvermittler unter erneuter Hitzeeinwirkung erforderlichenfalls auch mehrfach in seine schmelzklebende Phase überführt werden kann. Der derart zu einer, gegen Verschmutzungen oder Beschädigungen gesicherten Einheit zusammengestellte Verbund stellt ein leicht transportierbares und jederzeit überall weiterzuverarbeitendes Halbzeug 6 dar. Das aus der transluszenten Steinschicht 1 und den jeweils beidseits vorgesehenen Ethylen-Vinyl-Acetat-Folien 2 und PET-Schichten 3 bestehende Halbzeug 6 kann anschließend am Ort der Endverarbeitung vorzugsweise beidseits mit einer außenseitigen Glasscheibe versehen werden, wobei zwischen jede dieser Glasplatten und der äußeren PET-Schicht des Halbzeugs eine Ethylen-Vinyl-Acetat-Folie einzulegen ist, welche die benachbarte Glasplatte mit dem Halbzeug verbindet.

## Patentansprüche

1. Verbundwerkstoff, der als ein zur Weiterverarbeitung bestimmtes Halbzeug ausgebildet ist, mit einer Steinschicht, die zumindest auf einer ihrer beiden Flachseiten einen Grundträger hat, welcher Grundträger zur Verbindung mit den vom Grundträger beaufschlagten Oberflächen bestimmt ist, und der eine Kunststofffolie aus einem thermo- oder duroplastischen Kunststoff aufweist, **dadurch gekennzeichnet, dass** die für den Grundträger verwendete Kunststofffolie eine transluszente Ethylenvinylacetat-Folie ist, die unter Druck- und/oder Temperatureinwirkung derart mehrstufig abbindet, dass die Ethylenvinylacetat-Folie in einer ersten Abbindungsstufe eine Schmelzkleberfunktion entfaltet und in einer nachfolgenden Abbindungs- oder Verarbeitungsstufe eine dauerhaft kraftschlüssige Verbindung mit den vom Grundträger beaufschlagten Oberflächen eingeht, und dass auf die der Steinschicht abgewandte Außenseite dieser Kunststofffolie eine PET-Folie als Haftvermittler aufgebracht ist.

2. Verbundwerkstoff nach Anspruch 1, **dadurch gekennzeichnet, dass** der Verbundwerkstoff verformbar, insbesondere dreidimensional verformbar, ist.

3. Verbundwerkstoff nach Anspruch 1 oder 2, **dadurch gekennzeichnet, dass** die Steinschicht zumindest auf einer ihrer beiden Flachseiten und insbesondere auf beiden Flachseiten jeweils mit einem, eine mehrstufig abbindende Ethylenvinylacetat-Folie sowie außenseitig eine PET-Folie aufweisenden Grundträger verbunden ist.

4. Verbundwerkstoff nach einem der Ansprüche 1 bis 3, **dadurch gekennzeichnet, dass** die für den Grundträger verwendete und aus einer mehrstufig abbindenden Ethylenvinylacetat-Folie hergestellte Kunststofffolie eine bei Normaltemperatur nichtklebende und unter Hitze- und/oder Druckeinwirkung klebende Kunststofffolie ist.

5. Verbundwerkstoff nach einem der Ansprüche 1 bis 4, **dadurch gekennzeichnet, dass** die für den Grundträger verwendete Ethylenvinylacetat-Folie durchsichtig oder lichtdurchlässig ist.

6. Verbundwerkstoff nach einem der Ansprüche 1 bis 5, **dadurch gekennzeichnet, dass** zumindest ein Grundträger des Verbundwerkstoffes auf seiner einen Flachseite mit der Steinschicht verbunden und auf seiner der Steinschicht abgewandten Flachseite zur Verbindung mit einer Glasplatte bestimmt ist.

7. Verbundwerkstoff nach einem der Ansprüche 1 bis 6, **dadurch gekennzeichnet, dass** der Verbundwerkstoff zur Herstellung eines Verkleidungselementes insbesondere zur Wand- oder Fassadenverkleidung ausgebildet ist.

8. Verbundwerkstoff nach einem der Ansprüche 1 bis 7, **dadurch gekennzeichnet, dass** das Korngefüge der aus einem körnigen Steinmaterial hergestellten Steinschicht aufgelöst ist.

9. Verbundwerkstoff nach einem der Ansprüche 1 bis 8, **dadurch gekennzeichnet, dass** die Steinschicht eine Naturstein- oder eine Kunststeinschicht ist.

10. Verkleidungselement, insbesondere zur Wand- oder Fassadenverkleidung, das unter Verwendung des in einem der Ansprüche 1 bis 9 beschriebenen Verbundwerkstoffes hergestellt ist.

## Claims

1. Composite material which is embodied as a semi-finished product intended for further processing, having a layer of stone which has a base support at least on one of its two flat sides, said base support being intended for attachment to the surfaces acted upon by the base support, and comprising a plastics film consisting of a thermo- or duroplastic synthetic material, **characterised in that** the plastics film used for the base support is a translucent ethylenevinyl acetate film which sets in several stages under the effect of pressure and/or temperature, such that in a first setting stage the ethylenevinyl acetate film develops a hot melt adhesive function and in a subsequent setting or processing stage enters into a durably frictional connection with the surfaces acted upon by the base support, and **in that** a PET film is applied, as an adhesion promoter, to the outer side of this plastics film remote from the stone layer.

2. Composite material according to claim 1, **characterised in that** the composite material is deformable, more particularly three dimensionally deformable.

3. Composite material according to claim 1 or 2, **characterised in that** the stone layer is attached, on at least one of its two flat sides and in particular on both flat sides, to a base support which comprises an ethylenevinyl acetate film that sets in several stages and, on the outside, a PET film.

4. Composite material according to one of claims 1 to 3, **characterised in that** the plastics film used for the base support and made from an ethylenevinyl acetate film that sets in several stages is a plastics film that is non-adhesive at normal temperature and adheres under the effect of heat and/or pressure.

5. Composite material according to one of claims 1 to 4, **characterised in that** the ethylenevinyl acetate film used for the base support is transparent or translucent.

6. Composite material according to one of claims 1 to 5, **characterised in that** at least a base support of the composite material is attached, on one of its flat sides, to the stone layer and, on its flat side remote from the stone layer, is intended to be attached to a sheet of glass.

7. Composite material according to one of claims 1 to 6, **characterised in that** the composite material is embodied to produce a cladding element, particularly for cladding a wall or façade.

8. Composite material according to one of claims 1 to 7, **characterised in that** the grain structure of the stone layer produced from a granular stone material is broken up.

9. Composite material according to one of claims 1 to 8, **characterised in that** the stone layer is a layer of natural or synthetic stone.

10. Cladding element, particularly for cladding a wall or façade, which is produced using the composite material described in one of claims 1 to 9.

## Revendications

1. Matériau composite réalisé sous la forme d'un produit semi-fini destiné au traitement ultérieur, présentant une couche de pierre munie d'un substrat de base sur au moins l'une de ses deux faces aplaties, lequel substrat de base est conçu pour être relié aux surfaces impactées par ledit substrat de base, et est pourvu d'un film en une matière synthétique thermoplastique ou thermodurcissable, **caractérisé par le fait que** le film de matière synthétique, utilisé pour le substrat de base, est un feuil translucide d'éthylène-acétate de vinyle se liant en plusieurs phases, sous l'effet de la pression et/ou de la température, de façon telle que ledit feuil d'éthylène-acétate de vinyle remplisse la fonction d'un adhésif thermofusible lors d'une première phase de liaison et instaure, au cours d'une phase successive de liaison ou de traitement, une solidarisation à adhérence durable avec les surfaces impactées par le substrat de base ; et **par le fait qu'**un feuil de PET est appliqué, en tant qu'agent d'adhérence, sur la face extérieure de ce film de matière synthétique qui est tournée à l'opposé de la couche de pierre.

2. Matériau composite selon la revendication 1, **caractérisé par le fait que** ledit matériau composite est déformable et peut, en particulier, subir une déformation tridimensionnelle.

3. Matériau composite selon la revendication 1 ou 2, **caractérisé par le fait que** la couche de pierre est respectivement reliée, au moins par l'une de ses deux faces aplaties et notamment par les deux faces aplaties, à un substrat de base comportant un feuil d'éthylène-acétate de vinyle se liant en plusieurs phases, ainsi qu'un feuil de PET sur la face extérieure.

4. Matériau composite selon l'une des revendications 1 à 3, **caractérisé par le fait que** le film de matière synthétique, utilisé pour le substrat de base et fabriqué en un feuil d'éthylène-acétate de vinyle se liant en plusieurs phases, est un film de matière synthétique n'adhérant pas à température normale et adhérant sous l'action de la chaleur et/ou de la pression.

5. Matériau composite selon l'une des revendications 1 à 4, **caractérisé par le fait que** le feuil d'éthylène-acétate de vinyle, utilisé pour le substrat de base, est transparent ou translucide.

6. Matériau composite selon l'une des revendications 1 à 5, **caractérisé par le fait qu'**au moins un substrat de base dudit matériau composite est relié à la couche de pierre par l'une de ses faces aplaties, et est destiné à être relié à un panneau de verre par sa face aplatie tournée à l'opposé de ladite couche de pierre.

7. Matériau composite selon l'une des revendications 1 à 6, **caractérisé par le fait que** ledit matériau composite est réalisé pour la fabrication d'un élément de parement dévolu, en particulier, à l'habillage de parois ou de façades.

8. Matériau composite selon l'une des revendications 1 à 7, **caractérisé par le fait que** le grain de la couche de pierre, fabriquée à partir d'une substance pierreuse granulée, est de type dispersé.

9. Matériau composite selon l'une des revendications 1 à 8, **caractérisé par le fait que** la couche de pierre est une couche en pierre naturelle ou en pierre artificielle.

10. Elément de parement notamment dévolu à l'habillage de parois ou de façades, fabriqué par utilisation du matériau composite décrit dans l'une des revendications 1 à 9.
